# EUROPÄISCHE PATENTSCHRIFT

(11) **EP 1 069 775 B1**
(45) Veröffentlichungstag und Bekanntmachung des Hinweises auf die Patenterteilung: **17.05.2006**
(21) Anmeldenummer: 00112124.3
(22) Anmeldetag: 06.06.2000
(51) Int. Cl.: H04N 7/14

(54) **Vorrichtung in Fahrzeugen zum Durchführen eines Ferngesprächs**
System for making telephone calls from vehicles
Système pour effectuer un appel téléphonique depuis un véhicule

(30) Priorität: 16.07.1999 DE 19933326
(43) Veröffentlichungstag der Anmeldung: 17.01.2001
(73) Patentinhaber: Bayerische Motoren Werke Aktiengesellschaft, 80809 München (DE)
(72) Erfinder: Bengler, Klaus-Josef, Dr., 93197 Regendorf/Zeilarn (DE)

(56) Entgegenhaltungen:
- EP-A- 0 789 343
- DE-A- 19 640 735
- DE-A- 19 738 764
- DE-A- 19 741 896

## Beschreibung

Die Erfindung bezieht sich auf ein Verfahren in Fahrzeugen zum Durchführen eines Ferngesprächs.

Bei Telefonaten, die im Fahrzeug geführt werden, wird bisher nur akustische Information zwischen den Gesprächspartnern übermittelt. Für den Betrieb im Festnetz existieren hingegen bereits verschiedene Bildtelefone, die sowohl gesprochene Sprache als auch Bildinformationen darstellen.

Telefonate im Fahrzeug binden sehr stark die Aufmerksamkeit des Fahrers und können zu gefährlichen Verkehrssituationen führen. Ein Grund dafür ist, dass der externe Gesprächspartner die aktuelle Verkehrssituation nicht kennt, wodurch es ihm nicht möglich ist, sein Gesprächsverhalten darauf abzustimmen. Dieses kooperative Verhalten zeigt im Normalfall der Beifahrer. Damit fordert er den Fahrer häufig zu Aussagen in belastenden Situationen auf.

Bei der Anwendung von an sich bekannter Bildtelefonie (vgl. DE 197 36 675 A) in einem Fahrzeug ergibt sich zusätzlich das Problem der häufig fehlenden Übertragungskapazität.

Aus der EP 789 343 A1 ist es bekannt, die mit einem Fahrzeug gewonnenen Informationen über das Verkehrsgeschehen, beispielsweise die Geschwindigkeit dieses Fahrzeugs, an eine Datensammelstelle zu übertragen und anderen Verkehrsteilnehmer zur Verfügung zu stellen.

Die DE 197 41 896 A1 offenbart eine Bilderfassungs- Bildverarbeitungs- und Bildwiedergabeeinrichtung für ein Fahrzeug, in der eine Bilderfassungseinrichtung ein Bild von Bereichen der Umgebung des Fahrzeugs aufnimmt, die Bildverarbeitungseinrichtung das Bild schematisch vereinfacht und die Bildwiedergabeeinrichtung das vereinfachte Bild wiedergibt.

Schließlich offenbart die DE 197 38 764 A1 eine Vorrichtung in einem Fahrzeug zur vereinfachten Wiedergabe eines Bildes des Verkehrsgeschehens in der Umgebung des Fahrzeugs mit Hilfe von Informationen, die mit Hilfe eines Navigationssystems gewonnen werden.

Der Erfindung liegt die Aufgabe zugrunde, ein Verfahren der eingangs genannten Art zu schaffen, mit dem es möglich wird, für den Empfänger wichtige Informationen über die aktuelle Situation eines in einem Fahrzeug sitzenden Gesprächsteilnehmer zu übermitteln.

Die Erfindung löst diese Aufgabe mit den Merkmalen des Patentanspruchs 1 bzw. alternativ mit denen des Patentanspruchs 2 sowie in vorteilhafter Ausgestaltung mit den Merkmalen der Patentansprüche 3 und 4.

Dem Fahrer wird es ermöglicht, zusätzlich zum Sprechkanal die Gesprächsverbindung um die visuelle Übertragung der Verkehrssituation via Bildtelefonie zu ergänzen. Dem Gesprächspartner des Fahrers wird - sofern ein Bildtelefon beim Gesprächspartner vorhanden ist - die aktuelle Verkehrssituation schematisch übermittelt.

Bei der Realisierung der Erfindung, wie sie aus dem Patentanspruch 1 hervorgeht, wird im Fahrzeug die zu übertragende Datenmenge für das mit der Bilderfassungseinrichtung aufgenommene Bild reduziert.

Beim Patentanspruch 2 wird die Bildinformation vollständig ohne Bilderfassungseinrichtung nur mit Hilfe von Informationen generiert, die fahrzeugintern mit einem ohnehin vorhandenen Navigationssystem gewonnen werden. Dieses liefert Informationen über den Typ der aktuell befahrenen Strasse und die angrenzenden Strassen. Aus diesen Informationen wird fahrzeugintern mit üblichen Bildsyntheseeinrichtungen mit elektronischen Mitteln ebenfalls ein schematisches Umgebungsbild erzeugt. Hierbei haben wechselnde Umwelteinflüsse (Regen, Nebel, Dunkelheit) keine Auswirkungen auf die Qualität der schematischen Darstellung der Verkehrssituation, die im Stil der graphischen Navigationsinformation erfolgt. Ergänzend kann die Information der Fahrzeugsensorik, wie eines Abstandskontrollsystem (liefert Informationen über vorausfahrende und entgegenkommende Fahrzeuge) und eines Systems zum Erfassen umgebender Fahrzeuge in die Darstellung der Verkehrsituation integriert werden.

Die Aktualisierung der Darstellung richtet sich nach den Übertragungsmöglichkeiten. Gegebenenfalls ist eine stärkere Schematisierung zugunsten einer höheren Aktualisierungsrate in Kauf zu nehmen. Eine Aktualisierung des Bildes in zeitlichen Abständen, beispielsweise im Abstand von einigen Sekunden, hat sich als vorteilhaft erwiesen.

Die akustischen Informationen des Navigationssystems sollten vorzugsweise leicht überschwellig als Hintergrundinformation für den Gesprächspartner vorhanden sein, um Informationen zu bevorstehenden Abbiegevorgänge zu übermitteln ohne das Telefonat zu stören.

Die notwendige Übertragungskapazität kann durch einen zweiten synchronisierten Übertragungskanal oder erhöhte Übertragungsleistung eines Kanals bereitgestellt werden, der im Stillstand auch zur Übermittlung von Dokumentinformationen (Schrift, Bild) Im Sinne einer Telekonferenz genutzt werden kann.

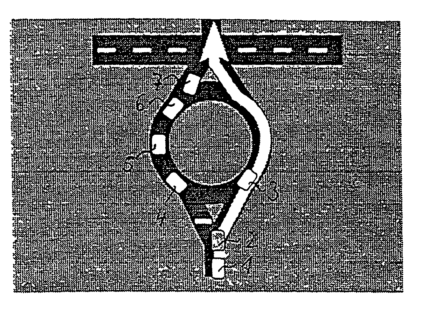

Eine schematische Darstellung der Verkehrssituation ist in der Figur gezeigt. Das mit einer Kamera aufgenommene Fernsehbild wird ergänzt durch Informationen, die aus einem Navigationssystem (nicht dargestellt) stammen, in Bird-view-Technik dargestellt. Das Fahrzeug, aus dem das Ferngespräch geführt wird, ist mit 1 bezeichnet, entsprechend vorausfahrende Fahrzeuge tragen die Bezugsziffern 2 und 3. Entgegenkommende Fahrzeuge sind mit den Bezugsziffern 4 bis 7 versehen. Es ist hier ohne weiteres zu erkennen, daß sich das Fahrzeug in einer die volle Aufmerksamkeit des Fahrers erfordernden Verkehrssituation befindet.

Das Gesprächsverhalten des Gesprächspartners durch verbesserte Information bezüglich der aktuellen Verkehrssituation wird kooperativer und berücksichtigt die Erfordernisse der Fahraufgabe durch Pausen oder Bezugnahme auf die Verkehrssituation.

## Patentansprüche

1. Verfahren zum Durchführen eines Ferngesprächs in einem Fahrzeug, **dadurch gekennzeichnet, dass** während des Ferngesprächs mit einer Bilderfassungseinrichtung ein Bild von Bereichen der Umgebung aufgenommen und das Bild des Verkehrsgeschehens in der Umgebung des Fahrzeugs schematisch durch elektronische Bildverarbeitung vereinfacht und zum Empfänger übertragen wird, so dass nur noch relevante Informationen zum Verkehrsgeschehen, die im Blickfeld der Bilderfassungseinrichtung liegen, zusammen mit dem Ferngespräch zum Empfänger übertragen und unwichtige Umgebungsdetails unterdrückt werden.

2. Verfahren zum Durchführen eines Ferngesprächs in einem Fahrzeug, **dadurch gekennzeichnet, dass** während des Ferngesprächs ein Bild des Verkehrsgeschehens in der Umgebung des Fahrzeugs schematisch vereinfacht generiert und zum Empfänger übertragen wird, wobei die Bildinformation vollständig ohne Bilderfassungseinrichtung mit Hilfe von Informationen generiert wird, die fahrzeugintern mit einem ohnehin vorhandenen Navigationssystem sowie mit weiterer fahrzeuginterner Sensorik zum Erfassen vorausfahrender, entgegenkommender und/oder umgebender Fahrzeuge gewonnen werden.

3. Verfahren nach Anspruch 1 oder 2, **dadurch gekennzeichnet, dass** das Bild in zeitlichen Abständen erneuert wird.

4. Verfahren nach Anspruch 3, **dadurch gekennzeichnet, dass** die Abstände gleich einige Sekunden sind.

## Claims

1. A method of making a telephone call from a vehicle, **characterised in that** during the conversation an image acquiring device takes a picture of regions of the environment and the picture of the traffic in the neighbourhood of the vehicle is diagrammatically simplified by electronic image processing and transmitted to the receiver, so that only information relevant to the traffic situation in the field of vision of the image acquisition device is transmitted to the recipient together with the telephone conversation, and unimportant environmental details are suppressed,

2. A method of making a telephone call from a vehicle, **characterised in that** during the conversation a diagrammatically simplified image of the traffic in the neighbourhood of the vehicle is generated and transmitted to the receiver, wherein the image information is generated completely without an image acquisition device, using information obtained inside the vehicle by an existing navigation system and by other sensors in the vehicle for detecting vehicles in front, coming in the opposite direction and/or nearby.

3. A method according to claim 1 or 2, **characterised in that** the image is renewed at intervals.

4. A method according to claim 3, **characterised in that** the intervals are equal to a few seconds.

## Revendications

1. Procédé d'appel téléphonique dans un véhicule,
**caractérisé en ce que**
pendant l'appel téléphonique, une image des zones de l'environnement est reçue à l'aide d'un dispositif de détection d'images et l'image de l'événement de circulation dans l'environnement du véhicule est représentée schématiquement de manière simplifiée au moyen d'un traitement d'image électronique pour être transmise au destinataire, de sorte que seules les informations encore importantes pour l'événement de circulation et se trouvant dans le champ visuel du dispositif de détection d'images sont transmises au destinataire conjointement avec l'appel téléphonique et que les détails non importants de l'environnement sont supprimés.

2. Procédé pour effectuer un appel téléphonique dans un véhicule,
**caractérisé en ce que**
pendant l'appel téléphonique, une image de l'événement de la circulation dans l'environnement du véhicule est générée schématiquement de manière simplifiée et transmise au destinataire, les informations d'image étant entièrement générées sans dispositif de détection d'images, mais à l'aide d'informations qui ont été obtenues à l'intérieur du véhicule à l'aide d'un système de navigation qui est par ailleurs présent, ainsi qu'à l'aide d'autres systèmes de capteurs internes au véhicule qui détectent des véhicules précédents, venant en sens inverse et/ou environnants.

3. Procédé selon la revendication 1 ou 2,
**caractérisé en ce que**
l'image est mise à jour à des intervalles temporels.

4. Procédé selon la revendication 3,
**caractérisé en ce que**
les intervalles sont de quelques secondes.
